# EUROPÄISCHE PATENTSCHRIFT

(11) **EP 0 883 805 B1**
(45) Veröffentlichungstag und Bekanntmachung des Hinweises auf die Patenterteilung: **22.05.2002**
(21) Anmeldenummer: 97907041.4
(22) Anmeldetag: 25.02.1997
(51) Int. Cl.: G01N 29/02

(54) **VERFAHREN UND VORRICHTUNG ZUR KONTINUIERLICHEN MESSUNG UND REGELUNG DER ZUSAMMENSETZUNG EINER FEUCHTMITTELLÖSUNG FÜR DEN OFFSETDRUCK**
METHOD AND DEVICE FOR THE CONTINUOUS MEASUREMENT AND CONTROL OF THE COMPOSITION OF A WETTING-AGENT SOLUTION FOR OFFSET PRINTING
PROCEDE ET DISPOSITIF POUR LA MESURE ET LA REGULATION EN CONTINU DE LA COMPOSITION D'UNE SOLUTION D'AGENT MOUILLANT POUR L'IMPRESSION OFFSET

(30) Priorität: 29.02.1996 DE 19607681
(43) Veröffentlichungstag der Anmeldung: 16.12.1998
(73) Patentinhaber: Baldwin Grafotec GmbH, 86165 Augsburg (DE)
(72) Erfinder: RAUH, Wolfgang, D-81241 München (DE); DIETZEL, Stephan, D-81243 München (DE)
(74) Vertreter: Vetter, Ewald Otto, Dipl.-Ing.
(86) Internationale Anmeldenummer: EP9700895
(87) Internationale Veröffentlichungsnummer: WO9732205

(56) Entgegenhaltungen:
- EP-A- 0 012 160
- EP-A- 0 263 036
- WO-A-91/14177
- US-A- 5 255 564
- US-A- 5 473 934

## Beschreibung

Die Erfindung betrifft ein Verfahren sowie eine Vorrichtung zur kontinuierlichen Messung und Regelung der Zusammensetzung einer Feuchtmittellösung für den Offsetdruck, bestehend aus Wasser und wenigstens einem wassermischbaren organischen Lösungsmittel, wie insbesondere kurzkettigen Alkoholen, Glykolen oder Glykoläthern.

Beim Offsetdruckverfahren besteht die Druckform aus einer dünnen Metallplatte, die mit einer lichtempfindlichen Schicht überzogen ist. Diese Schicht kann bildmäβig gehärtet werden, so daß eine flache Druckform entsteht. Die druckenden und nicht druckenden Teile liegen praktisch in einer Ebene und unterscheiden sich nur in ihrem Benetzungsvermögen. Die nicht druckenden, hydrophilen Bereiche sind besonders gut mit Wasser bzw. einem Gemisch aus Wasser und wasserlöslichen organischen Lösungsmitteln, der sogenannten Feuchtmittellösung, und sehr schlecht mit öligen Flüssigkeiten benetzbar. Im Regelfall wird als organische Hauptkomponente 2-Propanol in Konzentrationen zwischen 3 und 15 Volumenprozenten in diesen Feuchtmittellösungen eingesetzt.

Beim Druckvorgang wird die Feuchtmittellösung aus einem sogenannten Feuchtwerk als dünner Flüssigkeitsfilm an die Druckplatte transportiert. Dort nehmen die nicht druckenden Bereiche der Druckform einen Teil der Feuchtmittellösung ab, während an den oleophilen drukkenden Bereichen der Druckform die Feuchtmittellösung abgestoßen wird und somit auf den sogenannten Feuchtauftragswalzen verbleibt und sich im sogenannten Feuchtmittelkasten der Druckmaschine wieder mit der dort befindlichen Feuchtmittellösung vermischt.

Die Feuchtmittellösung muß somit ständig um die Menge ergänzt werden, die von der Druckplatte abgenommen wird. Diese Volumenergänzung erfolgt im Regelfall mit einer sogenannten Feuchtmittelaufbereitungsanlage. In dieser Anlage wird die Feuchtmittellösung gekühlt, im Volumen ergänzt und im Kreislauf wieder dem Feuchtmittelkasten zugeführt. Zusätzlich hat diese Anlage die Aufgabe, den Anteil an 2-Propanol in der Feuchtmittellösung zu ergänzen, dessen Gehalt sich aufgrund seiner gegenüber Wasser deutlich erhöhten Verdunstungsgeschwindigkeit während des kontinuierlich verlaufenden Druckvorganges vermindert. Üblicherweise erfolgt die Steuerung der Dosierung des 2-Propanols bei der Aufbereitung der Feuchtmittellösung durch eine Kontrolle der Dichte der Feuchtmittellösung und einer mit der Dichtekontrolleinrichtung verbundenen Dosiereinrichtung. Ein derartiges System ist beispielsweise aus der DE-A-41 36 263 bekannt.

Die Steuerung der Zusammensetzung der Feuchtmittellösung durch eine Dichtekontrolle führt in der Praxis zu großen Differenzen zwischen dem Meß- bzw. Regelwert und dem tatsächlichen Gehalt in der Lösung. Abweichungen von 50 % oder höher sind keine Ausnahme. Ursache hierfür ist die geringe Veränderung der absoluten Dichtewerte im Konzentrationsbereich, der für die praktische Anwendung relevant ist. Zudem können Verfälschungen der Anzeige durch Verschmutzungen der Auftriebskörper praktisch nicht ausgeschlossen werden. Versuche zur Minimierung dieses Problems durch eine Vergrößerung der Auftriebskörper führten zu einer Verbesserung, konnten jedoch die prinzipiellen Schwächen des Verfahrens nicht kompensieren. Dichteveränderungen bleiben prinzipiell sehr anfällig gegenüber dem Salzeintrag aus den verwendeten Zusatzstoffen und Papieren sowie Temperaturschwankungen. Diese Einflüsse sind im Regelfall bekannt und wurden in der Vergangenheit toleriert, da sie bei einem 2-Propanolgehalt von 12 bis 15 % eine zwar hohe, dennoch aber tolerable Meßwertabweichung darstellten.

Drucktechnische Untersuchungen der letzten Jahre zeigten jedoch, daß es ohne Einschränkung der Produktionssicherheit möglich ist, mit einem 2-Propanolgehalt von 7 - 8 % zu drucken. Speziell konstruierte Feuchtwerke in Kombination mit optimierten Zuschlagstoffen erlaubten sogar noch die Verwendung deutlich niedrigerer 2-Propanolgehalte. In diesem Konzentrationsbereichen sind die prinzipiell unvermeidbaren Meßwertabweichungen der Dichtekontrolle nicht mehr akzeptabel.

Alternativ zur Dichtekontrolle sind eine Reihe anderer Techniken beschrieben, die es erlauben, den 2-Propanolgehalt zu kontrolieren. Derartig bekannte Verfahren sind beispielsweise die Messungen von Brechungsindex, Viskosität und der Leitfähigkeit. Aus der EP-A-0 159 412 wird zudem die Messung der Oberflächenspannung zur Bestimmung des 2-Propanolgehaltes beschrieben. Eine andere Technik zur exakten Bestimmung der 2-Propanolgehalts besteht in der sprektralen Absorption, wie sie beispielsweise durch die DE-A-43 24 141 bekannt ist. In der DE-A-43 40 026 wird die Messung der Konzentration des 2-Propanols in der Gasphase durchgeführt.

All diese Verfahren haben sich bei Praxisanwendungen nicht bewährt. In einigen Fällen war die entsprechende Sensortechnik gegenüber den in der Praxis auftretenden Verschmutzungen nicht robust genug. In anderen Fällen war die Herstellung der Sensoren und der zugehörigen Steuereinheiten mit zu hohen Kosten verbunden.

Der Erfindung liegt daher die Aufgabe zugrunde, ein Verfahren bzw. eine Vorrichtung anzugeben, wodurch eine besonders exakte Messung und Regelung der Zusammensetzung von Feuchtmittellösungen für den Offsetdruck gewährleistet ist.

Diese Aufgabe wird durch die Merkmale der Ansprüche 1 und 11 gelöst.

Weitere Ausgestaltungen der Erfindung sind Gegenstand der Unteransprüche.

Erfindungsgemäß wird die Schallausbreitungsgeschwindigkeit in der Feuchtmittellösung gemessen und hieraus ein Regelsignal gebildet, um die Zusammensetzung der Feuchtmittellösung konstant zu halten.

Aus den der Erfindung zugrundeliegenden Versuchen hat sich gezeigt, daß die Messung der Schallgeschwindigkeit eine reproduzierbare Erfassung von Konzentrationsänderungen unterhalb von 0.1 % erlaubt. Zudem ist die prozentuale Änderung des Meßsignals bei der Messung der Schallgeschwindigkeit gegenüber der Dichtemessung um ein Vielfaches höher.

Das erfindungsgemäße Verfahren weist zudem eine deutlich geringere Abhängigkeit von einer Könzentrationsänderung durch Salze aus dem Rohwasser oder aus Papierbestandteilen auf. Weitere Vorteile und Ausgestaltungen der Erfindung werden anhand der nachfolgenden Beschreibung und der Zeichnung näher erläutert.

In der Zeichnung zeigen
- Fig.1: eine schematische Darstellung einer Vorrichtung für den Offsetdruck und
- Fig.2: ein Diagramm der prozentualen Änderung der Meßgröße gegenüber dem Lösungsmittelgehalt.

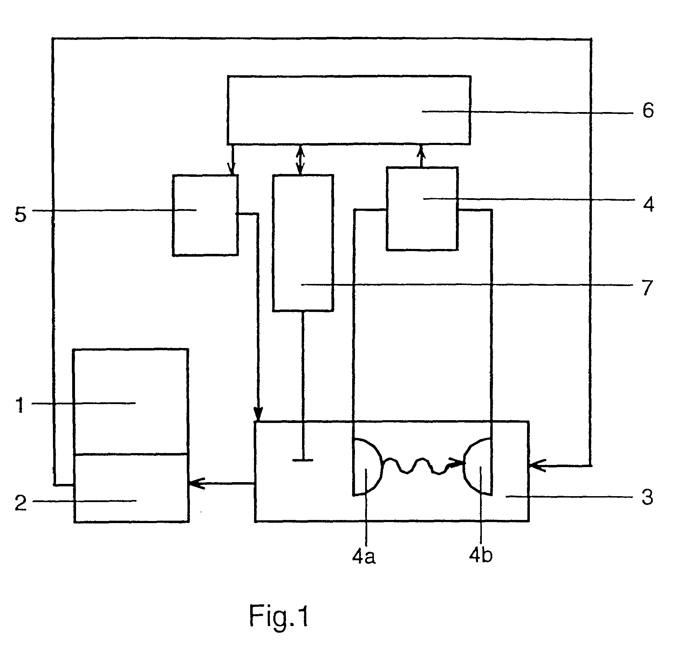

Die in Fig.1 schematisch dargestellte Vorrichtung für den Offsetdruck besteht im wesentlichen aus einem Druckwerk 1, einem Feuchtwerk 2 sowie einer Feuchtmittelaufbereitungsanlage 3.

Ferner ist eine Einrichtung zur Messung der Schallgeschwindigkeit der in der Feuchtmittelaüfbereitungsanlage befindlichen Feuchtmittellösung vorgesehen. Sie ist beispielsweise als Tauchsonde ausgebildet, die einen Schallsender 4a, insbesondere einen Ultraschallsender, sowie einen Schallempfänger 4b aufweist. Eine andere Möglichkeit besteht darin, die Einrichtung zur Messung der Schallgeschwindigkeit als Rohrsonde auszuführen und beispielsweise in der Verbindungsleitung zwischen dem Feuchtwerk 2 und der Feuchtmittelaufbereitungsanlage 3 anzuordnen.

Die Feuchtmittelaufbereitungsanlage 3 steht ferner mit einer Dosiereinheit 5 in Verbindung, mit der die Zugabe eines wassermischbaren organischen Lösungsmittel zur Feuchtmittellösung einstellbar ist. Ferner ist eine Steuereinheit 6 vorgesehen, in der das von der Einrichtung 4 zur Messung der Schallgeschwindigkeit ermittelte Meßsignal in ein Regelsignal umgewandelt wird, das die Dosierung des Lösungsmittels aus der Dosiereinheit 5 derart steuert, daß die Zusammensetzung des Feuchtmittels im wesentlichen konstant gehalten wird.

Die Temperatur der Feuchtmittellösung in der Feuchtmittelaufbereitungsanlage 3 wird über eine Einrichtung 7 gemessen und ggf. nachgeregelt.

Beim Druckvorgang wird die Feuchtmittellösung aus dem Feuchtwerk 2 an eine Druckplatte des Druckwerks 1 transportiert. Dort nehmen die nicht druckenden Bereiche der Druckplatte einen Teil der Feuchtmittellösung ab, während an den oleophilen druckenden Bereichen der Druckplatte die Feuchtmittellösung abgestoßen wird und sich in einem Feuchtmittelkasten des Feuchtwerkes 2 wieder mit der dort befindlichen Feuchtmittellösung vermischt. Die Volumenergänzung erfolgt in der Feuchtmittelaufbereitungsanlage 3. In dieser Anlage wird die Feuchtmittellösung über die Einrichtung 7 gekühlt, im Volumen ergänzt und im Kreislauf wieder dem Feuchtwerk 2 zugeführt.

Die Feuchtmittellösung besteht aus Wasser und wenigstens einem wassermischbaren organischen Lösungsmittel, wie insbesondere kurzkettigen Alkoholen, Glykolen oder Glykoläthern. Ferner sind der Feuchtmittellösung diverse Zusatzstoffe zugesetzt. Als Lösungsmittel wird derzeit üblicherweise 2-Propanol eingesetzt, dessen Gehalt sich in der Feuchtmittellösung aufgrund seiner gegenüber Wasser deutlich erhöhten Verdunstungsgeschwindigkeit während des kontinuierlich verlaufenden Druckvorganges vermindert. Zur Steuerung der Dosierung des Lösungsmittels wird beim erfindungsgemäßen Verfahren die Schallausbreitungsgeschwindigkeit in der Feuchtmittellösung ermittelt. Dazu emitiert der Schallsender 4a ein kurzes Signal, welches sich in der Feuchtmittellösung ausbreitet und vom Schallsender 4b aufgenommen wird. Bei konstantem Abstand zwischen Sender und Empfänger kann durch Messung der Zeit, die das Schallsignal vom Sender zum Empfänger benötigt, die Schallgeschwindigkeit unmittelbar berechnet werden. Jede Flüssigkeit hat eine spezifische Ausbreitungsgeschwindigkeit der Schallwellen. Bei einer beispielsweise aus zwei Komponenten bestehenden Flüssigkeitsmischung lassen sich somit die Anteile der beiden Komponenten durch Messung der Schallgeschwindigkeit berechnen.

Dieses an sich bekannte Meßprinzip soll nun erfindungsgemäß auch bei der Bestimmung der Konzentration des Lösungsmittels in der Feuchtmittellösung für den Offsetdruck verwendet werden. Bei den der Erfindung zugrundeliegenden Versuchen hat sich jedoch gezeigt, daß das Meßsignal durch in der Feuchtmittellösung befindliche Gasbläschen verfälscht wird und dadurch die Messung der Schallgeschwindigkeit starken Schwankungen unterliegt. Es ist daher erforderlich, daß Mittel vorgesehen sind, die die Bildung eines Regelsignals verhindern, das auf einer durch Gasbläschen in der Feuchtmittellösung verursachten fehlerhaften Messung der Schallausbreitungsgeschwindigkeit beruht.

Dies könnte beispielsweise durch eine Entgasungskammer realisiert werden, wie sie aus dem Stand der Technik bekannt ist. Eine andere Möglichkeit besteht darin, daß diejenigen Meßsignale, die durch Gasbläschen verfälscht sind, bei der Bildung des Regelsignals unberücksichtigt bleiben. Dies kann insbesondere durch eine geeignete Software in der Steuereinheit 6 durchgeführt werden. Als besonders vorteilhaft in diesem Zusammenhang erweist sich die Tatsache, daß sich die durch Gasbläschen verfälschten Meßsignale deutlich von den ordentlichen Meßsignalen unterscheiden. In der Steuereinheit 6 wird dann in Abhängigkeit der gemessenen Schallgeschwindigkeit ein Regelsignal gebildet, mit dem über die Dosiereinheit 5 der Gehalt des Lösungsmittel ggf. verändert werden kann.

Da die Schallausbreitungsgeschwindigkeit einer Lösung sehr stark von der Temperatur abhängig ist, wird zudem über die Einrichtung 7 die Temperatur ermittelt. Üblicherweise wird die Feuchtmittellösung auf einer bestimmten Temperatur gehalten. Es besteht jedoch auch die Möglichkeit, die Temperatur bei der Bildung des Regelsignals zu berücksichtigen.

Sofern die Feuchtmittellösung mehrere Lösungsmittel enthält, kann auch eine entsprechende Anzahl an Dosiereinheiten 5 vorgesehen werden.

Mit diesem Verfahren läßt sich die Zusammensetzung der Feuchtmittellösung, und damit insbesondere die Konzentration des Lösungsmittels, konstant halten.

Neben der Dosiereinheit 5 für das oder die Lösungsmittel sind selbstverständlich auch weitere Zugabeeinrichtungen vorgesehen, die in der Zeichnung jedoch nicht dargestellt sind, um die weiteren Bestandteile der Feuchtmittellösung, wie insbesondere Wasser und diverse Zusatzstoffe, zu ergänzen.

### Beispiel 1:

Zur Eichung einer Feuchtmittelaufbereitungsanlage wurden Testmischungen aus entionisiertem Wasser mit einem steigenden Gehalt an 2-Propanol hergestellt. Bei 25° C ergaben diese Mischungen folgende Schallgeschwindigkeiten bzw. Dichten:

| Gehalt an 2-Propanol | Schallgeschwindigkeit [m/s] | Dichte [g/cm³] |
|---|---|---|
| 0 | 1494,2 | 0,995 |
| 3 | 1517,0 | 0,993 |
| 6 | 1537,0 | 0,989 |
| 12 | 1577,9 | 0,980 |

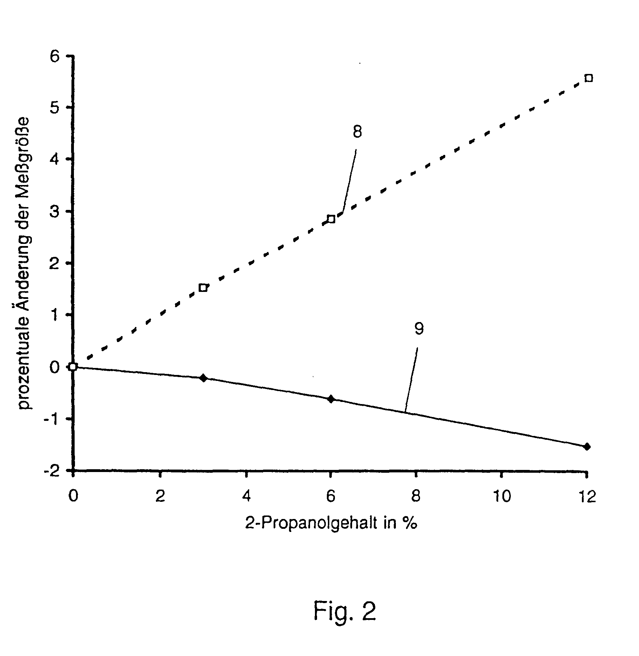

In dem Diagramm der Fig.2 ist die prozentualle Änderung der Meßgröße des Beispieles 1 gegenüber dem 2-Propanolgehalt in Prozent aufgetragen. Der gestrichelte Graph 8 entspricht dabei den bei der Schallgeschwindigkeitsmessung ermittelten Werten, während der durchgezogene Graph 9 der Dichtemessung zuzuordnen ist.

Die prozentuale Änderung der Meßgröße bei der Messung der Schallgeschwindigkeit beträgt 5,6 % gegenüber 1,51 % bei der Dichtemessung. Die Ultraschallmessung führt somit zu einer wesentlich größeren prozentualen Änderung der Meßgröße und ermöglicht daher eine entsprechend genauere Bestimmung der Konzentration des Lösungsmittels in der Feuchtmittellösung.

Die Messung der Schallgeschwindigkeit kann bis zu einer Genauigkeit von ± 0,1 m/s erfolgen, sofern eine ausreichend genaue Temperaturmessung von ± 0,1 °C gewährleistet werden kann. Bei einer Schallgeschwindigkeit von etwa 1500 bis 1650 m/s im Fall einer 2-Propanol/Wassermischung erlaubt dies eine sichere Messung von Konzentrationsänderungen unterhalb von 0,1 %.

### Beispiel 2:

Versetzt man die Testmischungen aus Beispiel 1 mit 2 % Natriumchlorid, wobei diese Menge weit von den in der Praxis zu findenden Salzkonzentrationen entfernt ist, ergaben sich bei 25 °C folgende Schallgeschwindigkeiten und Dichten:

| Gehalt an 2-Propanol | Schallgeschwindigkeit [m/s] | Dichte [g/cm³] |
|---|---|---|
| 0 | 1520,4 | 1,013 |
| 3 | 1538,6 | 1,007 |
| 6 | 1558,1 | 1,005 |
| 12 | 1597,2 | 0,995 |

Vergleicht man die Meßwerte dieser extrem aufgesalzten Lösungen mit den Eichkurven, so zeigt sich, daß bei einer Betrachtung der Schallgeschwindigkeiten eine durchschnittliche Abweichung von ca. 3 % erhöhtem 2-Propanolgehalts angezeigt wird. Betrachtet man die Abweichungen der Dichtewerte, so führen die im Vergleich mit Beispiel 1 erhöhten Dichtewerte zu einer Verschiebung der Meßwerte in einen Bereich, der von den in der Praxis üblichen Meßspindeln nicht mehr erfaßt wird, da sie im Regelfall für Dichtemessungen im Bereich von 0,995 bis 0,96 g/cm³ ausgelegt sind.

Das Meßsignal nach dem Ultraschallprinzip weist somit eine deutlich geringere Abhängigkeit von einer Konzentrationsänderung durch Salze aus dem Rohwasser oder aus Papierbestandteilen auf.

### Beispiel 3:

Die Messung der Schallgeschwindigkeit an einem aus einer Offsetdruckmaschine während laufender Produktion entnommenen Feuchtmittelgemisch ergab einen Wert von 1.619,5 m/s. Dieser Wert entspricht laut Eichkurve einem Gehalt von 17,9 % 2-Propanol.

Die Dichte des Feuchtmittels wurde mit 0,984 g/cm³ ermittelt. Dieser Dichtewert entspricht laut Eichkurve einem Gehalt von 9,3 % 2-Propanol.

Vergleicht man diese beiden Meßwerte der Prozentkontrolle mit einem im Labor ermittelten gaschromatographischen Eichwert von 17,4 %, so zeigt sich auch hier die Überlegenheit des erfindungsgemäßen Verfahrens mittels Schallgeschwindigkeitsmessung.

Mit dem erfindungsgemäßen Verfahren ist nicht nur die Erfassung und Regelung des 2-Propanolgehalts wässriger Feuchtmittellösungen möglich, sondern auch die Kontrolle von Feuchtmittellösungen, die aus anderen organischen Substanzen zusammengesetzt sind.

## Patentansprüche

1. Verfahren zur kontinuierlichen Messung und Regelung der Zusammensetzung einer Feuchtmittellösung für den Offsetdruck, bestehend aus Wasser, wenigstens einem wassermischbaren organischen Lösungsmittel, und gegebenenfalls einem oder mehreren Zusatzstoffen,
**dadurch gekennzeichnet, daß** die Schallausbreitungsgeschwindigkeit in der Feuchtmittellösung gemessen und hieraus ein Regelsignal gebildet wird, um die Zusammensetzung der Feuchtmittellösung konstant zu halten.

2. Verfahren nach Anspruch 1, **dadurch gekennzeichnet, daß** die Temperatur der Feuchtmittellösung ermittelt wird.

3. Verfahren nach Anspruch 2, **dadurch gekennzeichnet, daß** die ermittelte Temperatur bei der Bildung des Regelsignals berücksichtigt wird.

4. Verfahren nach Anspruch 1, **dadurch gekennzeichnet, daß** die Feuchtmittellösung auf einer vorgegebenen Temperatur gehalten wird.

5. Verfahren nach einem der Ansprüche 1 bis 4, **dadurch gekennzeichnet, daß** Mittel vorgesehen sind, die die Bildung eines Regelsignals verhindern, das auf einer durch Gasbläschen entstehenden Fehlmessung der Schallausbreitungsgeschwindigkeit beruht.

6. Verfahren nach Anspruch 5, **dadurch gekennzeichnet, daß** die Gasbläschen im Bereich der Schallgeschwindigkeitsmessung entfernt werden.

7. Verfahren nach Anspruch 5, **dadurch gekennzeichnet, daß** die durch Gasbläschen verursachten Fehlmessungen der Schallgeschwindigkeit bei der Bildung des Regelsignals nicht berücksichtigt werden.

8. Verfahren nach einem der Ansprüche 1 bis 7, **dadurch gekennzeichnet, daß** das Regelsignal zur Dosierung des Lösungsmittels verwendet wird.

9. Verfahren nach einem der Ansprüche 1 bis 8, **dadurch gekennzeichnet, daß** als organisches Lösungsmittel 2-Propanol zur Anwendung kommt.

10. Verfahren nach einem der Ansprüche 1 bis 8, **dadurch gekennzeichnet, daß** als organische Lösungsmittel kurzkettige Alkohole, Glykole oder Glykoläther bzw. Mischungen aus diesen Substanzgruppen zur Anwendung kommen.

11. Vorrichtung zur kontinuierlichen Messung und Regelung der Zusammensetzung einer Feuchtmittellösung nach einem der Ansprüche 1 bis 10 mit
- einer Einrichtung 4 zur Messung der Schallgeschwindigkeit in der Feuchtmittellösung,
- einer Einrichtung (Steuereinheit 6) zur Bildung eines Regelsignals in Abhängigkeit der gemessenen Schallgeschwindigkeit,
- sowie einer Dosiereinrichtung 5 zur Dosierung des Lösungsmittels in Abhängigkeit des Regelsignals.

## Claims

1. Process for the continuous measurement and control of the composition of a wetting agent solution for offset printing, consisting of water, at least one water-miscible organic solvent and optionally one or more auxiliary substances, **characterised in that** the sound propagation velocity in the wetting agent solution is measured and used to form a control signal in order to keep the composition of the wetting agent solution constant.

2. Process according to claim 1, **characterised in that** the temperature of the wetting agent solution is determined.

3. Process according to claim 2, **characterised in that** the temperature that is determined is taken into consideration in forming the control signal.

4. Process according to claim 1, **characterised in that** the wetting agent solution is kept at a specified temperature.

5. Process according to one of claims 1 to 4, **characterised in that** measures are provided that prevent the formation of a control signal based on a false measurement of the sound propagation velocity due to gas bubbles.

6. Process according to claim 5, **characterised in that** the gas bubbles are removed in the area in which the sonic velocity is measured.

7. Process according to claim 5, **characterised in that** the false measurements of the sonic velocity caused by gas bubbles are not taken into consideration in forming the control signal.

8. Process according to one of claims 1 to 7, **characterised in that** the control signal is used for metering the solvent.

9. Process according to one of claims 1 to 8, **characterised in that** 2-propanol is used as organic solvent.

10. Process according to one of claims 1 to 8, **characterised in that** short-chain alcohols, glycols or glycol ethers or mixtures of these groups of substances are used as organic solvents.

11. Device for the continuous measurement and control of the composition of a wetting agent solution according to one of claims 1 to 10 with
- a mechanism 4 for measuring the sonic velocity in the wetting agent solution,
- a mechanism (control unit 6) for forming a control signal according to the measured sonic velocity,
- and a metering mechanism 5 for metering the solvent according to the control signal.

## Revendications

1. Procédé pour mesurer et ajuster en continu la composition d'une solution d'agent mouillant pour l'impression offset composée d'eau, d'au moins un solvant organique miscible dans l'eau et le cas échéant d'un ou de plusieurs adjuvants, **caractérisé en ce que** l'on mesure la vitesse de propagation du son dans la solution d'agent mouillant et qu'on la convertit en un signal de réglage afin de maintenir constante la composition de la solution d'agent mouillant.

2. Procédé selon la revendication 1, **caractérisé en ce que** l'on détermine la température de la solution d'agent mouillant.

3. Procédé selon la revendication 2, **caractérisé en ce que** l'on tient compte de la température mesurée lors de la formation du signal de réglage.

4. Procédé selon la revendication 1, **caractérisé en ce que** la solution d'agent mouillant est maintenue à une température prédéterminée.

5. Procédé selon l'une des revendications 1 à 4, **caractérisé en ce que** des moyens sont prévus qui empêchent la formation d'un signal de réglage basé sur une mesure erronée de la vitesse de propagation du son due à la présence de bulles de gaz.

6. Procédé selon la revendication 5, **caractérisé en ce que** l'on supprime les bulles de gaz dans la zone de la mesure de la vitesse du son.

7. Procédé selon la revendication 5, **caractérisé en ce que** les erreurs de mesure de la vitesse du son causées par les bulles de gaz ne sont pas prises en compte lors de la formation du signal de réglage.

8. Procédé selon l'une des revendications 1 à 7, **caractérisé en ce que** le signal de réglage est utilisé pour doser le solvant.

9. Procédé selon l'une des revendications 1 à 8, **caractérisé en ce que** l'on utilise en tant que solvant organique du 2-propanol.

10. Procédé selon l'une des revendications 1 à 8, **caractérisé en ce que** l'on utilise en tant que solvant organique des alcools, des glycols ou des esters de glycol à chaîne courte ou des mélanges de ces groupes de substances.

11. Dispositif pour mesurer et ajuster en continu la composition d'une solution d'agent mouillant selon l'une des revendications 1 à 10, comprenant :
- un dispositif 4 pour mesurer la vitesse du son dans la solution d'agent mouillant,
- un dispositif (unité de commande 6) pour former un signal de réglage en fonction de la vitesse du son mesurée,
- ainsi qu'un dispositif de dosage 5 pour doser le solvant en fonction du signal de réglage.
